Europäisches Patentamt

European Patent Office

Office européen des brevets

(11) Publication number: **0 050 174**
**B1**

## EUROPEAN PATENT SPECIFICATION

(45) Date of publication of patent specification: **08.05.85**

(21) Application number: **80303718.3**

(22) Date of filing: **21.10.80**

(51) Int. Cl.⁴: **F 16 G 5/20,** F 16 G 5/08

(54) **Cross-grooved banded drive belt.**

(43) Date of publication of application:
**28.04.82 Bulletin 82/17**

(45) Publication of the grant of the patent:
**08.05.85 Bulletin 85/19**

(84) Designated Contracting States:
**AT CH DE FR GB IT LI NL SE**

(56) References cited:
**EP-A-0 009 389**
**EP-A-0 010 919**
**EP-A-0 014 561**
**EP-A-0 018 456**
**AT-B- 136 897**
**US-A-3 564 933**
**US-A-4 002 082**
**US-A-4 011 766**
**US-A-4 177 686**

(73) Proprietor: **MITSUBOSHI BELTING LTD.**
**No. 1-21, Hamazoedori 4-Chome Nagata-ku**
**Kobe-shi Hyogo (JP)**

(72) Inventor: **Matsumura, Kaname**
**8-27, Chaenba-cho**
**Akashi-city Hyogo (JP)**

(74) Representative: **Jones, Michael Raymond et al**
**HASELTINE LAKE & CO. Hazlitt House 28**
**Southampton Buildings Chancery Lane**
**London WC2A 1AT (GB)**

Courier Press, Leamington Spa, England.

EP 0 050 174 B1

## Description

This invention relates to power transmission belts and in particular to cross-grooved banded belts.

In one conventional form of power transmission belt, a plurality of V-belt elements are retained in laterally spaced, parallel arrangement by a tie band. To provide improved flexibility in such tie band belts, transverse grooves have been provided in the distal portions of the V-belt elements. The present invention is concerned with an improved arrangement of the grooves of such a groove banded belt manufacture.

More specifically, one form of cross-grooved banded belt is illustrated in U.S. Letters Patent 2,802,511 of Dale L. Waugh. As shown therein, the V-belt elements are provided with transverse grooves which alternate from rib to rib in a staggered manner. Waugh teaches that the grooves should be disaligned so as to provide a greater area of contact between the belt and pulley at any given instant than would be provided if the grooves all lay in transverse alignment.

Donald E. Clinkenbeard, in U.S. Letters Patent 3,564,933, shows a banded transmission belt wherein the V-belt elements are of the wrapped type and the tie band is provided with a bias cut reinforcing fabric.

K. V. Gentry shows, in U.S. Letters Patent 3,626,775, a V-belt element having longitudinally symmetrical notches.

In U.S. Letters Patent 3,853,017 of Jack D. White, Jr., et al, a power transmission belt is disclosed wherein the tie band is reinforced by a knitted fabric layer.

Delyn M. Stork discloses, in U.S. Letters Patent 3,948,113, a power transmission belt wherein the V-belt elements are provided with transverse grooves which are illustrated as being segmentally cylindrical.

In U.S. Letters Patent 4,011,766, Dale L. Waugh shows a power transmission belt similar to that of the Waugh patent 2,802,511 discussed above wherein the V-belt elements are provided with grooves which are staggered in the respective V-belt elements. The patentee again requires the staggered relation of the equal-sized teeth of the V-belt elements to assure that the belt is free of hinge points and points out that if the grooves were in transverse alignment between the V-belt elements, they would cause a reduced thickness hinge line to be formed in the belt which would weaken the belt.

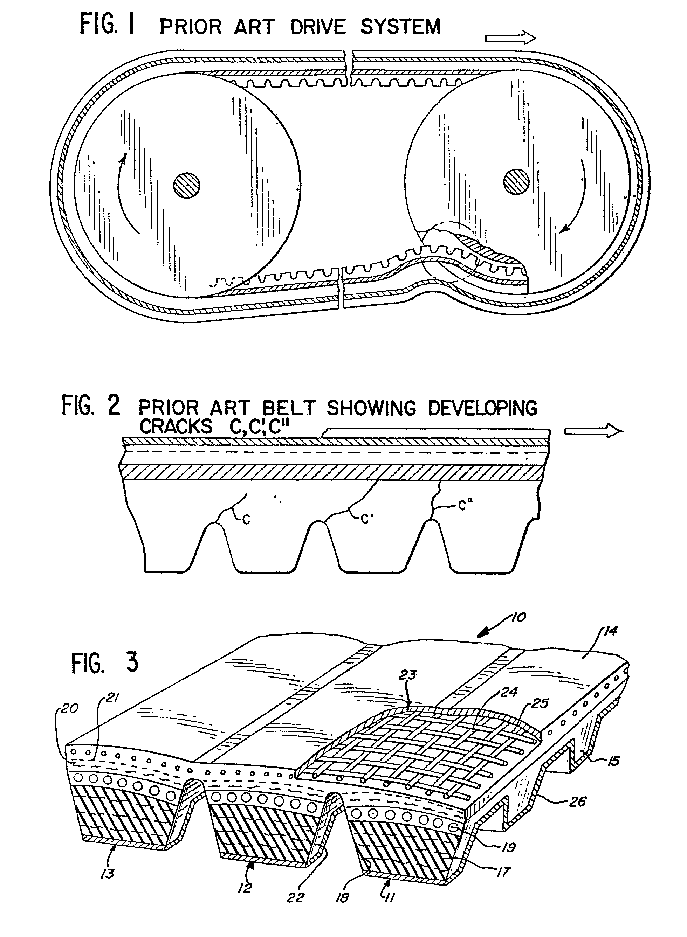

One of the problems found in the grooved banded belts of the prior art is illustrated in Figures 1 and 2 of the drawing. Thus, as shown in Figure 1, when such a transversely grooved banded belt is utilized for power transmission between a pair of pulleys, a number of different stresses and shearing forces are developed, tending to cause cracking of the belt, particularly from the root of the belt grooves, as illustrated in Figure 2. As further shown in Figure 1, a flexing of the belt occurs at the point where the belt leaves the driven pulley as the belt tends to remain in the annular grooves of the driven pulley both as a result of inertia and friction and, thus, is bent somewhat as it is pulled out of the grooves at a point beyond the tangent between the two pulleys, as illustrated in Figure 1. This constant flexing of the belt at this point further tends to produce cracks, such as illustrated in Figure 2. The proposed staggered arrangements of the belt grooves have not fully satisfactorily overcome the cracking problems and, thus, the different transversely grooved banded belts of the prior art have limited useful life.

In accordance with the present invention there is provided a power transmission belt (10) having a plurality of V-belt elements (11, 12, 13) retained in longitudinally extending laterally spaced relationship by a tie band (14), there being provided in said V-belt elements longitudinally spaced grooves (26) opening away from the tie band, the grooves of respective V-belt elements being substantially aligned transversely of the belt, each of said grooves being defined by an inclined transverse leading surface (28), a reversely inclined transverse trailing surface (29), and a bottom surface (30) in which the inclination of said leading and trailing surfaces to the longitudinal extent of the tie band are different whereby each groove defines an asymmetrical configuration in longitudinal cross-section.

Embodiments of the present invention provide an improved transversely grooved banded power transmission belt providing substantially improved useful life by effectively overcoming the problems of the above discussed prior art belts. Further, the improved belt construction of the present invention provides enhanced flexibility and strength, permitting the belt to be used on small diameter pulleys while concurrently effectively minimizing noise in the operation of the power transmission means.

In the illustrated embodiment, the leading surface of the groove differs from the trailing surface to provide grooves which are longitudinally asymmetrical. In the illustrated embodiment, the leading surface is a planar surface extending at an angle to the longitudinal extent of the belt which is different from that of the planar surface defining the trailing surface of the groove. As a result, the leading surface has a longer extent than that of the trailing surface.

In the illustrated embodiment, the grooves of the respective laterally related V-belt elements are aligned in a plurality of sets spaced longitudinally of the belt. Thus, the leading surfaces of each set of grooves are coplanar and the trailing surfaces of each set of grooves are coplanar.

In the disclosed embodiment, the leading surface is inclined at an angle to the longitudinal extent of the belt in the range of approximately 30° to 75°, and the trailing surface is inclined at an angle to the longitudinal extent of the belt in the range of approximately 72° to 84°. Resultingly, a difference between the angles of the leading and trailing surfaces relative to the longitudinal extent of the belt is in the range of approximately 2° to 30° in defining the asymmetric configuration of the grooves.

The invention is advantageously adapted for use in such banded belts of the raw edge type, as well as the wrapped type. The invention is further advantageously adapted for use with such banded belts having different types of reinforcement both in the tie band and in the V-belt elements.

Thus, the invention comprehends an improved power transmission belt structure utilizing aligned transverse grooves in the V-belt elements having asymmetrical longitudinal configurations. The respective sets of grooves may be spaced uniformly along the longitudinal extent of the belt, or may be randomly differently spaced as desired within the scope of the invention.

The power transmission belt of the present invention is extremely simple and economical of construction while yet providing long, trouble-free life as a result of the improved crack resistance.

For a better understanding of the present invention, and to show how the same may be carried into effect, reference will now be made, by way of example, to the accompanying drawings, in which:—

Figure 1 is a schematic illustration of a power transmission utilizing a transversely grooved belt illustrating the stresses and forces acting on the belt during power transmission which tend to cause failure of the belt;

Figure 2 is a fragmentary longitudinal, enlarged section illustrating the formation of cracks in the belt resulting from the induced stresses;

Figure 3 is a fragmentary perspective sectional view of one form of power transmission belt embodying the invention;

Figure 4 is a fragmentary enlarged longitudinal section of the embodiment of Figure 3;

Figure 5 is a fragmentary bottom plan view thereof;

Figure 6 is a fragmentary bottom plan view of a modified form thereof; and

Figure 7 is a fragmentary perspective view of another modified form of power transmission belt embodying the invention.

In the exemplary embodiments of the invention as disclosed in the drawing, a power transmission belt generally designated 10 is shown to comprise an improved banded belt structure including a plurality of V-belt elements 11, 12 and 13 retained in side-by-side laterally spaced relationship by a tie band 14.

In the embodiment of Figure 3, the V-belt elements are raw edge elements illustratively formed of elastomeric material wherein the side surfaces 15 are uncovered while the distal, or bottom, surface is provided with a covering fabric layer 16.

As further illustrated in Figure 3, each V-belt element may define a lowermost compression section 17 which illustratively may be provided with transversely extending short fibers 18. Outwardly of the compression section, the V-belt element is provided with a plurality of longitudinally extending tensile cords 19 and outwardly of the tensile cords, the V-belt element defines a tension section 20 which also may be provided with transversely extending short fibers 21.

The V-belt elements are spaced laterally apart in the belt 10 by the longitudinally extending grooves 22, which, as shown in Figure 3, extend upwardly to the tension section 20. As shown, the grooves 22 define the raw edges 15 between the V-belts.

Tie band 14 may be provided with suitable fabric reinforcement 23 and, in the illustrated embodiment of Figure 3, the fabric reinforcement is made up of cross yarns, or threads, 24 and 25. As is well known to those in the art, different forms of reinforcement fabric may be utilized in such tie bands. In the illustrated form, the warp threads 24 extend parallel to the longitudinal extent of the belt, whereas the woof threads 25 extend transversely thereto at right angles to the warp threads 24. In another suitable form for such reinforcing fabric, the reinforcing threads extend angularly to the longitudinal extent of the belt and may extend at an angle other than 90° to each other, such as in the range of 95° to 150°.

The belt 10 is formed primarily of suitable elastomeric material, such as rubber. The tie band reinforcing fabric may be formed of wind-shrunk warp threads formed of a synthetic fiber, such as a polyamide or polyester fiber. The woof threads may be formed of cotton fibers. In one form, the warp threads are retained parallel to the longitudinal extent of the belt by weak cotton woof threads.

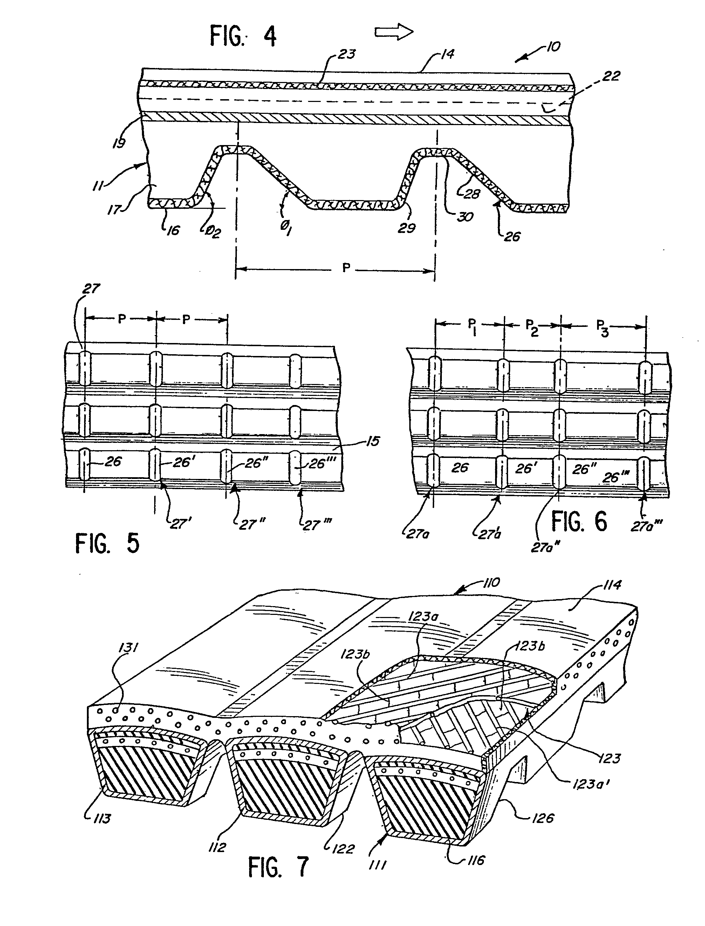

As indicated briefly above, the invention comprehends the provision of a plurality of transverse grooves in the distal portion of the V-belt elements and, more specifically, in the tension portion thereof. The grooves of the present invention are arranged in transverse alignment, as illustrated in Figures 5 and 6. As shown in Figure 5, grooves 26 may be aligned in a first set 27, a second set 27' spaced from first set 27 by a pitch distance P, a third set 27″ spaced from second set 27' by the same pitch distance P, and a fourth set 27‴ spaced from third set 27″ by the same pitch distance. The grooves of each set are aligned.

In Figure 6, the sets 27a, 27a', 27a″, and 27a‴ of the grooves 26, 26', 26″, and 26‴, respectively, are spaced apart at randomly different distances, such as distances $P_1$, $P_2$, and $P_3$. However, the grooves of each set are aligned with the other grooves of that set similarly as in the embodiment of Figure 5.

Referring now more specifically to Figure 4, each groove 26 is defined by an inclined leading surface 28, an inclined trailing surface 29, and a flat bottom surface 30. Bottom surface 30 extends parallel to the flatwise extent of the belt. Leading surface 28 preferably extends at an angle to the flatwise extent, i.e., angle $\phi_1$, in the range of approximately 30° to 75°, and in the illustrated embodiment, extends at an angle of 60°. Trailing surface 29 preferably extends at an angle to the flatwise extent of the belt, i.e., angle $\phi_2$ in the range of approximately 72° to 84°, and in the illustrated embodiment, extends at an angle of approximately 80°.

As indicated above, the improved belt structure 10 provides improved long life and crack resistance as compared to the belt structures of the prior art. Illustratively, a belt manufactured in accordance with the above disclosed invention was tested against two prior art belt structures. The results of the comparative test are illustrated in the following table:

| Belt | A | B | C |
|---|---|---|---|
| Crack occurrence | 10,000 hrs. | 4,000 hrs. | 6,000 hrs. |
| Belt life (durability) | 15,000 hrs. | 8,000 hrs. | 11,000 hrs. |

Belt A was a belt manufactured in accordance with the above disclosure and as illustrated in Figure 3 of the drawing. Belt B was a belt having wrapped V-belt elements without grooves provided therein and utilizing an angled reinforcement in the tie band portion, such as illustrated in Figure 7 of the drawing herein. Belt C was a belt similar to Belt A but having grooves such as shown in U.S. Patent 3,626,775 of Kay V. Gentry discussed above.

In conducting the comparative tests, the different belts were caused to transmit approximately 100 horsepower, with a driving pulley rotating at approximately 1500 rpm, the driving pulley outside diameter being approximately 355 millimeters, the center-to-center distance of the pulleys being approximately 1079 millimeters, and the effective diameter of the driven pulley being approximately 530 millimeters. As can be seen from the table, the belt of the present invention provides a substantial improvement in crack resistance and belt life over that of the prior art belts.

In a modified form of the invention as illustrated in Figure 7, the V-belt elements 111, 112 and 113 are similar to V-belt elements 11, 12 and 13, but are fully wrapped by a fabric layer 116. In this embodiment, the configuration illustratively may be one wherein the depth of the grooves 122 between the V-belt elements is approximately 20 millimeters, the depth of the transverse groove 126 is approximately 12 millimeters, the uniform pitch P between the sets of grooves is approximately 40 millimeters, the slant angle of the leading surface is approximately 50°, and the slant angle of the trailing surface is approximately 70°.

Further in the embodiment of Figure 7, the tie band 114 is formed of a two-ply fabric 123 wherein the wrap cords 123a and 123a' of the respective plies are maintained in association with each other by weak weft fibers 123b and 123b'. The warp cords may be formed of suitable strong material, such as cotton, polyamide, polyester, etc., and the woof cords are preferably formed of a relatively weak fine cotton material. The cord fabric is preferably rubber coated. As shown, the fabric layers are arranged with the crossing angle of the warp cords 123a, 123a' of the respective layers extending approximately 150° to each other. The angle of the warp cords illustratively is symmetrical about the longitudinal extent of the belt. A layer of elastomeric material 131 may be provided between the two fabric layers so as to prevent contact between the cords thereof and thereby effectively minimize stresses in the tie band as the belt passes around the pulleys. As in the embodiment of Figure 3, the invention comprehends that the asymmetrical transverse grooves be arranged in aligned sets and the sets may be uniformly spaced as in Figure 5, or randomly differently spaced as in Figure 6.

Thus, the power transmission belt generally designated 110 of Figure 7 is generally similar to the power transmission belt 10 of Figure 3 and functions in a generally similar manner within the scope of the invention.

Thus, the invention comprehends the provision of an improved power transmission belt wherein the transverse grooves have asymmetrical longitudinal cross sections while being provided in sets of transversely aligned grooves wherein the leading surfaces are coplanar and the trailing surfaces are coplanar with each other. The spacing between the sets of grooves may be uniform or different from set to set and further illustratively may be randomly different within the scope of the invention. In the illustrated embodiment, the difference between the angles of the leading and trailing surfaces is in the range of approximately 2° to 30°. As indicated above, the invention is advantageously adapted for both raw edge belt design and wrapped belt design and is further advantageously adaptive with a wide range of tie band and V-belt element parameters.

The foregoing disclosure of specific embodiments is illustrative of the broad inventive concepts comprehended by the invention.

**Claims**

1. A power transmission belt having a plurality of V-belt elements retained in longitudinally extending laterally spaced relationship by a tie band, there being provided in said V-belt elements longitudinally spaced grooves opening away from the tie band, the grooves of respective V-belt elements being substantially aligned transversely of the belt, each of said grooves being defined by an inclined transverse leading surface, a reversely inclined transverse trailing surface and a bottom surface characterised in that the inclination of said leading and trailing surfaces to the longitudinal extent of the tie band are different whereby the grooves defines an asymmetrical configuration in longitudinal cross section.

2. The power transmission belt of claim 1, wherein said leading surface is inclined to said longitudinal extent of the tie band at a smaller angle than that of the trailing surface.

3. The power transmission belt of claim 1 or 2, wherein said leading surface is inclined at an angle to said longitudinal extent in the range of approximately 30° to 75°, and said trailing surface is inclined at an angle to said longitudinal extent in the range of approximately 70° to 84°.

4. The power transmission belt of claim 1, 2 or 3, wherein said grooves are arranged in transversely aligned sets, the pitch interval between each of the sets longitudinally of the belt being substantially equal.

5. The power transmission belt of claim 1, 2 or 3, wherein said grooves are arranged in transversely aligned sets, the pitch interval between sets spaced longitudinally of the belt differing.

6. The power transmission belt of claim 1, 2 or 3, wherein said grooves are arranged in transversely aligned sets, the pitch interval between each of the sets longitudinally of the belt differing randomly.

7. The power transmission belt of any preceding claim, wherein the leading and trailing surfaces of the transversely aligned grooves are coplanar.

8. The power transmission belt of any preceding claim, wherein said V-belt elements comprise elastomeric elements provided with transversely extending distributed fibres (21).

9. The power transmission belt of any preceding claim, wherein said tie band is provided with a fabric reinforcement (23) formed of crimped yarn.

10. The power transmission belt of any preceding claim, wherein said leading surface is longer than the trailing surface, said leading surface is inclined to said longitudinal extent of the tie band at an angle approximately 20° smaller than that of the trailing surface, said leading surface being inclined at an angle to said longitudinal extent of approximately 60°, said trailing surface being inclined at an angle to said longitudinal extent of approximately 80°, said V-belt elements comprise raw edge elements, said V-belt elements comprise elastomeric elements provided with transversely extending distributed fibers, the distal surface of said elements remote from the tie band being covered with reinforcing fabric, and said tie band is provided with a filament reinforcement wherever the filaments cross at an angle in the range of 95° to 155°.

**Patentansprüche**

1. Treibriemen mit mehreren sich in Längsrichtung erstreckenden und durch ein Verbindungsband in seitlichem Abstand voneinander gehaltenen Keilriemenelementen, wobei in den Keilriemenelementen sich vom Verbindungssteg weg öffnende Nuten in Längsrichtung mit Abstand voneinander vorgesehen sind, die Nuten der einzelnen Keilriemenelemente in Querrichtung des Treibriemens im wesentlichen fluchten und jede der Nuten durch eine in Querrichtung verlaufende geneigte Vorderflanke, durch eine in Querrichtung verlaufende und im entgegengesetzten Sinne geneigte Hinterflanke und eine Bodenfläche definiert ist, dadurch gekennzeichnet, daß die Neigung der Vorderflanke und der Hinterflanke zur Längserstreckung des Verbindungssteges verschieden sind, wodurch die Nuten in einem Längsschnitt eine asymmetrische Konfiguration besitzen.

2. Treibriemen nach Anspruch 1, worin die Vorderflanke zur Längserstreckung des Verbindungssteges um einen kleineren Winkel geneigt ist als die Hinterflanke.

3. Treibriemen nach Anspruch 1 oder 2, worin die Vorderflanke zur Längserstreckung mit einem Winkel im Bereiche von etwa 30° bis 75° und die Hinterflanke zur Längserstreckung mit einem Winkel im Bereiche von etwa 70° bis 84° geneigt ist.

4. Treibriemen nach Anspruch 1, 2 oder 3, worin die Nuten in in Querrichtung fluchtenden Gruppen angeordnet sind und in Längsrichtung des Treibriemens der Folgeabstand zwischen jeder der Gruppen im wesentlichen gleich ist.

5. Treibriemen nach Anspruch 1, 2 oder 3, worin die Nuten in in Querrichtung fluchtenden Gruppen angeordnet sind und in Längsrichtung des Treibriemens der Folgeabstand zwischen Gruppen verschieden ist.

6. Treibriemen nach Anspruch 1, 2 oder 3, worin die Nuten in in Querrichtung fluchtenden Gruppen angeordnet sind und in Längsrichtung des Treibriemens der Folgeabstand zwischen jeder der Gruppen unregelmäßig ist.

7. Treibriemen nach irgendeinem vorhergehenden Anspruch, worin die Vorderflanken und die Hinterflanken der in Querrichtung fluchtenden Nuten coplanar sind.

8. Treibriemen nach irgendeinem vorhergehenden Anspruch, worin die Keilriemenelemente elastomere Elemente aufweisen, die mit sich in Querrichtung erstreckenden verteilten Fasern (21) versehen sind.

9. Treibriemen nach irgendeinem vorhergehenden Anspruch, worin das Verbindungsband mit einem aus Kräuselgarn gebildeten Verstärkungsgewebe (23) versehen ist.

10. Treibriemen nach irgendeinem vorhergehenden Anspruch, worin die Vorderflanke länger ist als die Hinterflanke, die Vorderflanke zur Längserstreckung des Verbindungsbandes mit einem um etwa 20° kleineren Winkel als die Hinterflanke geneigt ist, die Vorderflanke zu dieser Längserstreckung mit einem Winkel von etwa 60° geneigt ist, die Hinterflanke zu dieser Längserstreckung mit einem Winkel von etwa 80° geneigt ist, die Keilriemenelement rohe Randelement aufweisen, die Keilriemenelemente mit sich in Querrichtung erstreckenden verteilten Fasern ausgestattete elastomere Elemente aufweisen, die vom Verbindungsband weiter entfernt gelegene distale Fläche dieser Elemente mit einem Verstärkungsgewebe bedeckt ist und das Verbindungsband mit einer Verstärkung aus Fäden ausgestattet sind, welche sich mit einem Winkel im Bereich von 95° bis 155° kreuzen.

**Revendications**

1. Courroie de transmission de puissance comportant plusieurs éléments de courroies en V maintenus dans une disposition relative espacés latéralement et s'étendant longitudinalement, par une bande de liaison, des gorges espacées longitudinalement étant prévues dans lesdits éléments de courroies en V de façon à s'ouvrir à l'opposé de la bande de liaison, les gorges des éléments respectifs de courroies en V étant à peu près alignés transversalement à la courroie, chacune desdites gorges étant délimitée par une surface avant inclinée transversale, une surface arrière transversale inclinée en sens inverse et une surface de fond, caractérisée en ce que les inclinaisons desdites surfaces avant et arrière par rapport à l'étendue longitudinale de la bande de liaison sont différentes, de sorte que les gorges délimitent une configuration asymétrique en section longitudinale.

2. Courroie de transmission de puissance suivant la revendication 1, dans laquelle ladite surface avant est inclinée par rapport à l'étendue longitudinale de la bande de liaison suivant un angle plus petit que celui de la surface arrière.

3. Courroie de transmission de puissance suivant la revendication 1 ou 2, dans laquelle ladite surface avant est inclinée par rapport à ladite étendue longitudinale d'un angle compris dans la plage d'approximativement 30° à 75°, et en ce que ladite surface arrière est inclinée par rapport à ladite étendue longitudinale d'un angle compris dans la plage d'approximativement 70° à 84°.

4. Courroie de transmission de puissance suivant les revendications 1, 2 ou 3, dans laquelle lesdites gorges sont agencées en jexu alignés transversalement, le pas de l'intervalle entre chacun des jeux, longitudinalement par rapport à la courroie, étant à peu près égal.

5. Courroie de transmission de puissance suivant la revendication 1, 2 ou 3, dans laquelle lesdites gorges sont agencées en jexu alignés transversalement, le pas de l'intervalle entre les jeux espacés longitudinalement sur la courroie, étant différent.

6. Courroie de transmission de puissance suivant la revendication 1, 2 ou 3, dans laquelle lesdites gorges sont agencées en jeux alignés transversalement, le pas de l'intervalle entre chacun des jeux dans le sens longitudinal de la courroie différant de façon aléatoire.

7. Courroie de transmission de puissance suivant l'une quelconque des revendications précédentes, dans laquelle les surfaces avant et arrière des gorges alignées transversalement sont co-planaires.

8. Courroie de transmission de puissance suivant l'une quelconque des revendications précédentes, dans laquelle lesdits éléments de courroies en V sont constitués par des éléments en élastomère pourvus de fibres (21) réparties de façon à s'étendre transversalement.

9. Courroie de transmission de puissance suivant l'une quelconque des revendications précédentes, dans laquelle ladite bende de liaison est pourvue d'un tissu (23) de renforcement formé de fils frisés.

10. Courroie de transmission de puissance suivant l'une quelconque des revendications précédentes, dans laquelle ladite surface avant est plus longue que la surface arrière, ladite surface avant étant inclinée par rapport à ladite étendue longitudinale de la bande de liaison d'un angle d'approximativement 20° plus petit que celui de la surface arrière, ladite surface avant étant inclinée d'un angle par rapport à ladite étendue longitudinale d'approximativement 60°, ladite surface arrière étant inclinée par rapport à ladite étendue longitudinale d'un angle d'approximativement 80°, lesdits éléments de courroies en V comprenant des éléments à bords bruts, lesdits éléments de courroies en V comprenant des éléments en matière élastomère pourvus de fibres réparties s'étendant transversalement, la surface distale desdits éléments opposée à la bande de liaison étant couverte d'un tissu de renforcement, et ladite bande de liaison étant pourvue d'un filament de renforcement dans laquel les filaments sont croisés suivant un angle compris dans la plage de 95° à 155°.

FIG. 1   PRIOR ART DRIVE SYSTEM

FIG. 2   PRIOR ART BELT SHOWING DEVELOPING
CRACKS  C,C',C"

FIG. 3

# FIG. 4

# FIG. 5

# FIG. 6

# FIG. 7